(19) **Europäisches Patentamt**
**European Patent Office**
**Office européen des brevets**

(11) **EP 4 394 920 A1**

(12) **EUROPEAN PATENT APPLICATION**
published in accordance with Art. 153(4) EPC

(43) Date of publication:
**03.07.2024 Bulletin 2024/27**

(21) Application number: **22882520.4**

(22) Date of filing: **16.09.2022**

(51) International Patent Classification (IPC):
$H01M\ 4/133^{(2010.01)}$    $H01M\ 4/587^{(2010.01)}$
$H01M\ 10/0525^{(2010.01)}$    $C01B\ 32/205^{(2017.01)}$

(52) Cooperative Patent Classification (CPC):
Y02E 60/10

(86) International application number:
**PCT/CN2022/119231**

(87) International publication number:
**WO 2023/065909 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2021 CN 202111209294**

(71) Applicant: **Ningde Amperex Technology Limited Ningde, Fujian 352100 (CN)**

(72) Inventors:
• **TANG, Jia**
  **Ningde, Fujian 352100 (CN)**
• **DONG, Jiali**
  **Ningde, Fujian 352100 (CN)**
• **HE, Lihong**
  **Ningde, Fujian 352100 (CN)**
• **XIE, Yuansen**
  **Ningde, Fujian 352100 (CN)**

(74) Representative: **Icosa**
**83 avenue Denfert-Rochereau**
**75014 Paris (FR)**

(54) **ELECTROCHEMICAL DEVICE AND ELECTRONIC DEVICE**

(57) This application provides an electrochemical apparatus and an electronic apparatus. The electrochemical apparatus includes a negative electrode plate, where the negative electrode plate includes a negative electrode material layer, the negative electrode material layer includes a negative electrode active material, the negative electrode active material includes graphite, and $(d_1/d_2 - 1) \times 100\% \leq 0.56\%$ and $3.3600 \leq d_1 \leq 3.3720$ are satisfied; where $d_1$ Å is an interplanar spacing of (002) crystal plane of the negative electrode active material obtained by sintering the negative electrode material layer tested by an X-ray diffractometer, and $d_2$ Å is an interplanar spacing of the (002) crystal plane of the negative electrode active material in the negative electrode material layer tested by the X-ray diffractometer. The negative electrode plate of the electrochemical apparatus provided in this application has low swelling rate during cycling, so that the electrochemical apparatus also has low swelling rate during cycling.

FIG. 1

**Description**

This application claims priority to Chinese Patent Application No. 202111209294.5, filed with the China National Intellectual Property Administration on October 18, 2021 and entitled "ELECTROCHEMICAL APPARATUS AND ELECTRONIC APPARATUS", which is incorporated herein by reference in its entirety.

**TECHNICAL FIELD**

This application relates to the field of electrochemical technologies, and in particular, to an electrochemical apparatus and an electronic apparatus.

**BACKGROUND**

Lithium-ion batteries have advantages such as high energy storage density, high open-circuit voltage, low self-discharge rate, long cycle life, and high safety, and therefore are widely used in the fields such as portable electrical energy storage, electronic devices, and electric vehicles.

With the continuous improvement of lithium-ion battery technologies, charging speeds of lithium-ion batteries are increasingly fast. However, due to the inherent property of lithium-ion battery materials, the lithium-ion batteries swell during cycling, and especially negative electrode plates have a relatively high swelling rate. Lithium-ion batteries are prone to deform under a high swelling rate, which further leads to cycling failure of the lithium-ion batteries. In addition, with the relatively high swelling rate, terminal electronic products are susceptible to deformation or life reduction in later time, and even have safety risks. Therefore, how the swelling rate of the lithium-ion batteries is reduced during cycling is a problem that needs to be solved urgently.

**SUMMARY**

This application is intended to provide an electrochemical apparatus and an electronic apparatus, so as to reduce a swelling rate of the electrochemical apparatus during cycling.

A first aspect of this application provides an electrochemical apparatus. The electrochemical apparatus includes a negative electrode plate, where the negative electrode plate includes a negative electrode material layer, the negative electrode material layer includes a negative electrode active material, the negative electrode active material includes graphite, and $(d_1/d_2 - 1) \times 100\% \leq 0.56\%$ and $3.3600 \leq d_1 \leq 3.3720$ are satisfied; where $d_1$ Å is an interplanar spacing of (002) crystal plane of the negative electrode active material obtained by sintering the negative electrode material layer tested by an X-ray diffractometer and $d_2$ Å is an interplanar spacing of the (002) crystal plane of the negative electrode active material in the negative electrode material layer by the X-ray diffractometer. The interplanar spacing $d_1$ of the (002) crystal plane of negative electrode active material powder in the electrochemical apparatus and the interplanar spacing $d_2$ of the (002) crystal plane of the negative electrode active material in the negative electrode material layer are controlled to satisfy the foregoing relationship and allow $d_1$ to satisfy the foregoing range, so that the negative electrode active material has a small degree of swelling during cycling, effectively reducing a swelling rate of the negative electrode plate during cycling, thereby reducing a swelling rate of the electrochemical apparatus during cycling.

In an embodiment of this application, $3.3460 \leq d_2 \leq 3.3700$. $d_2$ being controlled within the foregoing range can effectively reduce the swelling rate of the negative electrode plate during cycling, thereby reducing the swelling rate of the electrochemical apparatus.

In an embodiment of this application, the negative electrode active material includes primary particles and secondary particles formed by agglomerating the primary particles. Types of particles in the negative electrode active material being controlled to satisfy the foregoing limitation is conducive to release of stress generated during delithiation and lithiation, alleviating breakage of particles caused by the stress generated during delithiation and lithiation, and improving electrochemical performance of the electrochemical apparatus.

In an embodiment of this application, based on the number of particles of the negative electrode active material, the negative electrode active material satisfies at least one of condition (a) or (b): (a) a number percentage of the primary particles is 1% to 50%; or (b) a number percentage of the secondary particles is 50% to 99%. The percentage of the primary particles and/or secondary particles being controlled within the foregoing range can effectively alleviate breakage of particles caused during delithiation and lithiation, improving energy density of the electrochemical apparatus.

In an embodiment of this application, a surface of the negative electrode active material has amorphous carbon. The surface of the negative electrode active material having the amorphous carbon is conducive to reducing stress generated during delithiation and lithiation, which reduces breakage of particles and the swelling rate of the electrochemical apparatus during cycling.

In an embodiment of this application, based on a mass of the negative electrode active material, a mass percentage of the amorphous carbon is 0.1% to 5%.

In an embodiment of this application, a density of the negative electrode material layer is X g/cc, a porosity of the negative electrode material layer is Y, and $Y + 53.47X \geq 125$ is satisfied. The density and porosity of the negative electrode material layer being controlled to satisfy the foregoing formula is conducive to migration of lithium ions, improving the electrochemical performance of the electrochemical apparatus.

In an embodiment of this application, the negative electrode plate satisfies at least one of the following characteristics: (c) the density of the negative electrode material layer is 1.4 g/cc to 1.75 g/cc; (d) a conductivity of the negative electrode material layer is greater than or equal to 15 S/cm; (e) the porosity of the negative electrode material layer is 25% to 50%; or (f) the graphite including at least one of artificial graphite or natural graphite. The density of the negative electrode material layer being controlled to be within the foregoing range can reduce the swelling rate of the negative electrode plate during cycling; the conductivity of the negative electrode material layer being controlled to be within the foregoing range is conducive to bonding of lithium ions and electrons, which can effectively reduce lithium precipitation of the negative electrode plate; the porosity of the negative electrode material layer being controlled to be within the foregoing range can improve the electrochemical performance of the electrochemical apparatus; and a type of the graphite being controlled to be within the foregoing range is conducive to improving the electrochemical performance of the electrochemical apparatus.

In an embodiment of this application, the electrochemical apparatus satisfies $L_1 - L_2 \leq 135\ \mu m$, $L_1$ is a thickness of the electrochemical apparatus in a fully charged state, and $L_2$ is a thickness of the electrochemical apparatus in a fully discharged state.

In an embodiment of this application, the electrochemical apparatus further includes a positive electrode plate, where the positive electrode plate includes a positive electrode material layer, a thickness of the positive electrode material layer is $d_3\ \mu m$, and a thickness of the negative electrode material layer is $d_4\ \mu m$, where $1.2 \leq d_4/d_3 \leq 1.6$. A thickness relationship between the positive electrode material layer and the negative electrode material layer being controlled to be within the foregoing range is conducive to intercalation and deintercalation of lithium ions in positive and negative electrodes, which can reduce the swelling rate of the electrochemical apparatus during cycling.

In an embodiment of this application, a density of the positive electrode material layer is 3.85 g/cc to 4.25 g/cc.

In an embodiment of this application, the electrochemical apparatus further includes an electrolyte, where the electrolyte includes carboxylate, and the carboxylate includes at least one of ethyl acetate, propyl acetate, propyl propionate, or ethyl propionate.

In an embodiment of this application, based on a mass of the electrolyte, a mass percentage of carboxylate is 5% to 55%.

In an embodiment of this application, the electrolyte further includes fluoroethylene carbonate and 1,3-propane sultone.

In an embodiment of this application, based on the mass of the electrolyte, a mass percentage of fluoroethylene carbonate is greater than a mass percentage of 1,3-propane sultone.

In an embodiment of this application, based on the mass of the electrolyte, the mass percentage of fluoroethylene carbonate is 1% to 10%.

In an embodiment of this application, based on the mass of the electrolyte, the mass percentage of 1,3-propane sultone is 0.1% to 4%.

In an embodiment of this application, the electrolyte further includes lithium difluorophosphate, and based on the mass of the electrolyte, a mass percentage of lithium difluorophosphate is 0.001% to 0.9%.

In an embodiment of this application, the electrolyte includes 1,3-propane sultone and lithium difluorophosphate, and the mass percentage of 1,3-propane sultone is greater than the mass percentage of lithium difluorophosphate.

A second aspect of this application provides an electronic apparatus, including the electrochemical apparatus described in embodiments of this application.

Additional aspects and advantages of the embodiments of this application are partly described and presented in subsequent descriptions, or explained by implementation of the embodiments of this application.

**BRIEF DESCRIPTION OF DRAWINGS**

To describe the technical solutions in the embodiments of this application and in the prior art more clearly, the following briefly describes the accompanying drawings required for describing the embodiments and the prior art. Apparently, the accompanying drawings in the following descriptions show merely some of the embodiments of this application, and a person of ordinary skill in the art may still derive other drawings from these accompanying drawings without creative efforts.

FIG. 1 is an X-ray diffraction pattern of a negative electrode active material in Example 1 of this application; and
FIG. 2 is a scanning electron microscope image of negative electrode active material particles mixed with primary particles and secondary particles in an embodiment of this application.

**DETAILED DESCRIPTION**

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application without creative efforts shall fall within the protection scope of this application.

It should be noted that in the specific embodiments of this application, an example in which a lithium-ion battery is used as an electrochemical apparatus is used to illustrate this application. However, the electrochemical apparatus in this application is not limited to the lithium-ion battery.

A first aspect of this application provides an electrochemical apparatus. The electrochemical apparatus includes a negative electrode plate, where the negative electrode plate includes a negative electrode material layer, the negative electrode material layer includes a negative electrode active material, the negative electrode active material includes graphite, and $(d_1/d_2 - 1) \times 100\% \leq 0.56\%$ and $3.3600 \leq d_1 \leq 3.3720$ are satisfied; where $d_1$ Å is an interplanar spacing of (002) crystal plane of the negative electrode active material obtained by sintering the negative electrode material layer tested by an X-ray diffractometer and $d_2$ Å is an interplanar spacing of the (002) crystal plane of the negative electrode active material in the negative electrode material layer tested by the X-ray diffractometer. For example, a value of $(d_1/d_2 - 1) \times 100\%$ may be 0.05%, 0.1%, 0.15%, 0.2%, 0.25%, 0.3%, 0.35%, 0.4%, 0.45%, 0.5%, 0.56%, or in any range therebetween, for example, $0.05\% \leq (d_1/d_2 - 1) \times 100\% \leq 0.56\%$ or $(d_1/d_2 - 1) \times 100\% \leq 0.4\%$. A value of $d_1$ may be 3.3600, 3.3620, 3.3640, 3.3660, 3.3680, 3.3700, 3.3720, or in any range therebetween, for example, $3.3640 \leq d_1 \leq 3.3720$. $d_2$ is an interplanar spacing of the (002) crystal plane of the negative electrode active material in a negative electrode plate treated under a pressure of 9.8 KN to 980 KN. In this application, pressure during pressure treatment (such as cold pressing) is determined according to the weight and the thickness of the negative electrode material layer per unit area. The pressure during the pressure treatment is controlled so as to control $d_2$. For example, when the pressure is controlled to be 88.2 KN, a value of $d_2$ is 3.354. Duration of the pressure treatment may also be controlled so as to control $d_2$. For example, a cold pressing rate is controlled to be 8 m/min to 20 m/min, provided that the objectives of this application can be achieved. In this application, the foregoing sintering treatment means sintering for 4h at 400°C in an air atmosphere.

Without wishing to be bound by any theory in this application, when the value of $(d_1/d_2 - 1) \times 100\%$ is excessively large (for example, greater than 0.56%), the interplanar spacing of the (002) crystal plane of the negative electrode material subjected to the pressure treatment in the negative electrode plate has a greater change compared with the interplanar spacing of the (002) crystal plane of negative electrode active material powder. Therefore, stress generated during delithiation and lithiation also has a large change, which are prone to increase a swelling rate of the negative electrode active material during delithiation and lithiation and even crush particles, affecting cycling performance of the electrochemical apparatus. $d_1$ may reflect the interplanar spacing of the (002) crystal plane of the negative electrode active material before the pressure treatment. When $d_1$ is excessively small (for example, smaller than 3.3600 Å), contact between particles during delithiation and lithiation increases with a great stress change and an increase in a swelling rate of the negative electrode plate, which leads to an increase in a swelling rate of the electrochemical apparatus during cycling. When $d_1$ is excessively large (for example, greater than 3.3720 Å), $(d_1/d_2 - 1) \times 100\% \leq 0.56\%$ cannot be satisfied, which also leads to the increase in the swelling rate of the electrochemical apparatus during cycling. Therefore, when the interplanar spacing $d_1$ of the (002) crystal plane of the negative electrode active material in the electrochemical apparatus and the interplanar spacing $d_2$ of the (002) crystal plane of the negative electrode active material in the negative electrode material layer satisfy the foregoing relationship and $d_1$ satisfies the foregoing range, the swelling rate of the negative electrode plate during cycling can be effectively reduced, thereby reducing the swelling rate of the electrochemical apparatus during cycling and low-temperature impedance of the electrochemical apparatus.

In an embodiment of this application, the interplanar spacing $d_2$ of the (002) crystal plane of the negative electrode active material in the negative electrode material layer satisfies: $3.3460 \leq d_2 \leq 3.3700$. For example, $d_2$ may be 3.3460, 3.3500, 3.3540, 3.3580, 3.3600, 3.3620, 3.3640, 3.3660, 3.3680, 3.3700, or in any range therebetween. Without wishing to be bound by any theory, $d_2$ being controlled within the foregoing range can effectively reduce the swelling rate of the negative electrode plate during cycling, thereby reducing the swelling rate of the electrochemical apparatus during cycling. It can be understood that when the negative electrode plate is subjected to the pressure treatment (for example, cold pressing), pressure during the pressure treatment affects $d_2$. For example, as the pressure increases, $d_2$ decreases and then tends to be a stable value.

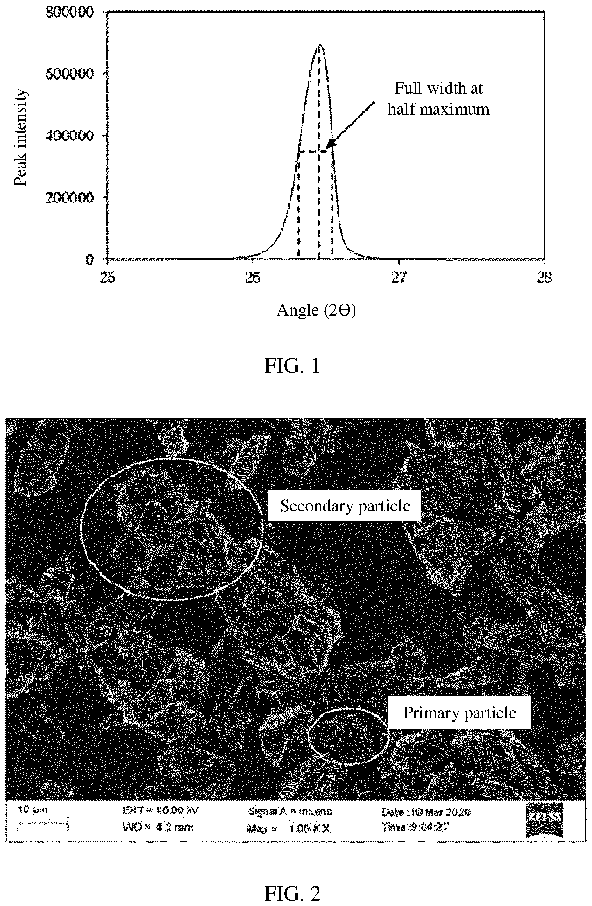

In an embodiment of this application, the negative electrode active material includes primary particles and secondary particles formed by agglomerating the primary particles. The negative electrode active material in this application including the primary particles and the secondary particles is conducive to release of stress generated during delithiation and lithiation, alleviating breakage of particles caused by the stress generated during delithiation and lithiation, and improving electrochemical performance of the electrochemical apparatus. FIG. 2 is a scanning electron microscope image of a negative electrode active material in an embodiment of this application, where the negative electrode active material includes primary particles and secondary particles. It can be seen from the figure that the primary particles and the secondary particles are different in morphology, and a particle size of the primary particle is less than a particle size of the secondary particle.

In this application, the primary particles are particles with a specific particle size distribution obtained by crushing precursor particles and then separating and graphitizing the crushed precursor particles. For example, the primary particles may include graphite primary particles, and the secondary particles may include graphite secondary particles. The particle size distribution is not particularly limited in this application, provided that the objectives of this application can be achieved. For example, the particle size distribution is 2 $\mu$m to 100 $\mu$m. An agglomeration method of the secondary particles formed by agglomerating the primary particles is not particularly limited in this application, provided that the objectives of this application can be achieved. For example, the secondary particles may be particles obtained by mixing the crushed primary particles with a specific proportion of asphalt, performing heat treatment on the resulting mixture with a pelletizer to make the particles be adhered together through the asphalt, and then graphitizing the adhered particles. A mass ratio of the primary particles and the asphalt is not particularly limited, provided that the objectives of this application can be achieved. For example, the mass ratio of the primary particles and the asphalt is 95:5 to 80:20. Heat treatment temperature is not particularly limited, provided that the objectives of this application can be achieved. For example, the heat treatment temperature is 400°C to 600°C.

In an embodiment of this application, based on the number of particles of the negative electrode active material, the negative electrode active material satisfies at least one of condition (a) or (b): (a) a number percentage of the primary particles is 1% to 50%; or (b) a number percentage of the secondary particles is 50% to 99%. For example, the number percentage of the primary particles may be 1%, 10%, 20%, 30%, 40%, 50%, or in any range therebetween. The number percentage of the secondary particles may be 50%, 60%, 70%, 80%, 90%, 99%, or in any range therebetween. Without wishing to be bound by any theory, the percentages of the primary particles and the secondary particles being controlled within the foregoing ranges can effectively alleviate breakage of particles caused during delithiation and lithiation, improving energy density of the electrochemical apparatus.

In an embodiment of this application, a surface of the negative electrode active material has amorphous carbon. A partial surface of the negative electrode active material particle may have the amorphous carbon. Alternatively, an entire surface of the negative electrode active material particle may have the amorphous carbon. Without wishing to be bound by any theory, the amorphous carbon may form a shell-like layer on the surface of the negative electrode active material to constrain the negative electrode active material to some extent, reducing volumetric swelling of the negative electrode active material, which diminishes contact between the particles and the stress generated during delithiation and lithiation. Therefore, this can reduce breakage of particles and the swelling rate of the electrochemical apparatus during cycling. In addition, when the shell-like layer formed by the amorphous carbon is a shell-like layer with pores, the negative electrode active material is easy to react with electrolyte in the electrochemical apparatus to form a more stable solid electrolyte interface (SEI), effectively preventing by-products from entering the negative electrode material layer, which alleviates breakage of particles caused by the by-products and further inhibits swelling of the electrochemical apparatus during cycling.

In an embodiment of this application, based on a total mass of the negative electrode active material, a mass percentage of the amorphous carbon is 0.1% to 5%, and preferably 1% to 3%. For example, the mass percentage of the amorphous carbon may be 0.1%, 0.3%, 0.5%, 1%, 1.5%, 2%, 2.5%, 3%, 4%, 5%, or in any range therebetween. Without wishing to be bound by any theory, the percentage of the amorphous carbon being excessively low (for example, less than 0.1%) has a minor improvement on the performance of the negative electrode material. With an increase of the percentage of the amorphous carbon, a short-range disorder formed by the amorphous carbon is not conducive to migration of electrons, so that conductivity of the negative electrode material layer decreases to some extent. However, a short-range disorder structure formed by the amorphous carbon is conducive to migration of lithium ions, so that direct-current resistance is reduced and lithium precipitation in the electrochemical apparatus is reduced. In addition, with a change in types of the amorphous carbon, if a disorder level of the amorphous carbon increases, the migration of electrons is further affected while the migration of lithium ions is improved; or if the disorder level of the amorphous carbon decreases, the migration of electrons is improved while the migration of lithium ions is affected. When the percentage of the amorphous carbon is excessively high (for example, greater than 5%), the electrons cannot migrate normally with exacerbation of the direct-current resistance, which results in serious lithium precipitation in the electrochemical apparatus. Therefore, the mass percentage of the amorphous carbon being controlled to be within the foregoing range is conducive to rapid deintercalation/intercalation of lithium ions and easy to form the stable SEI to avoid accumulation of the by-products. In addition, this can also reduce lithium precipitation in the electrochemical apparatus based on reduction of the swelling rate of the electrochemical apparatus.

In this application, the amorphous carbon may be obtained by carbonizing organic substances. The organic substances are not particularly limited to any type in this application, provided that the objectives of this application can be achieved. For example, the organic substances may include but are not limited to at least one of citric acid, asphalt, heavy oil, furfural resin, epoxy resin, or phenolic resin.

In an embodiment of this application, a density of the negative electrode material layer is X g/cc, a porosity of the negative electrode material layer is Y, and $Y + 53.47X \geq 125$ is satisfied. Without wishing to be bound by any theory, the density and porosity of the negative electrode material layer being controlled to satisfy the foregoing formula is conducive to migration of lithium ions, improving the electrochemical performance of the electrochemical apparatus. In this application, the density of the negative electrode material layer is a ratio of a coating weight of the negative electrode active material in the negative electrode material layer per unit area to the thickness of the negative electrode material layer.

In an embodiment of this application, the negative electrode plate satisfies at least one of the following characteristics: (c) the density of the negative electrode material layer is 1.4 g/cc to 1.75 g/cc; (d) a conductivity of the negative electrode material layer is greater than or equal to 15 S/cm; (e) the porosity of the negative electrode material layer is 25% to 50%; or (f) the graphite including at least one of artificial graphite or natural graphite. For example, the density of the negative electrode material layer may be 1.4 g/cc, 1.45 g/cc, 1.5 g/cc, 1.55 g/cc, 1.6 g/cc, 1.65 g/cc, 1.7 g/cc, 1.75 g/cc, or in any range therebetween. The conductivity of the negative electrode material layer may be 15 S/cm, 25 S/cm, 35 S/cm, 45 S/cm, 55 S/cm, 65 S/cm, 75 S/cm, 85 S/cm, or in any range therebetween. The porosity of the negative electrode material layer may be 25%, 30%, 35%, 40%, 45%, 50%, or in any range therebetween. In this application, the density of the negative electrode material layer is a density of the negative electrode material layer after treated under a pressure of 9.8 KN to 980 KN. The porosity of the negative electrode material layer is a porosity of the negative electrode material layer in the negative electrode plate obtained through disassembly of the electrochemical apparatus after the electrochemical apparatus subjected to less than or equal to 200 cycles of charge and discharge is fully discharged.

Without wishing to be bound by any theory in this application, the density of the negative electrode material layer being excessively low (for example, less than 1.4 g/cc) is not conducive to increase of energy density of lithium-ion batteries; or the density of the negative electrode material layer being excessively high (for example, greater than 1.75 g/cc) increases contact between particles with an increase of the stress generated during delithiation and lithiation, thereby leading to an increase in the swelling rate of the negative electrode plate during cycling. Therefore, when the density of the negative electrode material layer is within the foregoing range, the swelling rate of the negative electrode plate can be reduced during cycling, thereby reducing the swelling rate of the electrochemical apparatus during cycling and allowing the electrochemical apparatus to have a high energy density. When the conductivity of the negative electrode material layer is excessively low (for example, less than 15 S/cm), electrons cannot migrate normally with exacerbation of the direct-current resistance, which results in serious lithium precipitation in the electrochemical apparatus. Therefore, the conductivity of the negative electrode material layer being within the foregoing range is conducive to bonding of lithium ions and electrodes, which can effectively reduce lithium precipitation in the electrochemical apparatus. The porosity of the negative electrode material layer being excessively low (for example, less than 25%) is not conducive to migration of lithium ions, affecting the electrochemical performance of the electrochemical apparatus; or the porosity of the negative electrode material layer being excessively high (for example, greater than 50%) affects contact between the negative electrode active material particles in the negative electrode material layer, reducing kinetic performance of the negative electrode material layer, so that the electrical performance of the electrochemical apparatus during cycling is prone to be affected. Types of graphite being within the foregoing range is conducive to improving the electrochemical performance of the electrochemical apparatus.

In an embodiment of this application, the electrochemical apparatus satisfies $L_1 - L_2 \leq 135 \ \mu m$, $L_1$ is a thickness of the electrochemical apparatus in a fully charged state, and $L_2$ is a thickness of the electrochemical apparatus in a fully discharged state. This means that the swelling rate of the electrochemical apparatus provided in this application is low. $L_1$ is the thickness of the electrochemical apparatus that includes an electrode assembly and is in the fully charged state, and $L_2$ is the thickness of the electrochemical apparatus that includes an electrode assembly and is in the fully discharged state. In this application, voltages at full charge and full discharge can be set according to a specific electrochemical apparatus. For example, a full charge voltage may be 4.45 V and a full discharge voltage may be 3.0 V. The electrode assembly described in this application may be an electrode assembly including a positive electrode plate, a negative electrode plate, and a separator. Persons skilled in the art should understand that the foregoing description is only used as an example for illustration and does not limit the protection scope of this application.

In an embodiment of this application, the electrochemical apparatus further includes a positive electrode plate, where the positive electrode plate includes a positive electrode material layer, a thickness of the positive electrode material layer is $d_3 \ \mu m$, and a thickness of the negative electrode material layer is $d_4 \ \mu m$, where $1.2 \leq d_4/d_3 \leq 1.6$. For example, a value of $d_4/d_3$ may be 1.2, 1.3, 1.4, 1.5, 1.6, or in any range therebetween. A density of the positive electrode material layer is 3.85 g/cc to 4.25 g/cc. For example, the density of the positive electrode material layer may be 3.85 g/cc, 3.9 g/cc, 3.95 g/cc, 4 g/cc, 4.05 g/cc, 4.1 g/cc, 4.15 g/cc, 4.2 g/cc, 4.25 g/cc, or in any range therebetween. Without wishing to be bound by any theory, a thickness relationship between the positive electrode material layer and the negative electrode material layer and a density range of the positive electrode material layer are within the foregoing range, which is conducive to intercalation and deintercalation of lithium ions in positive and negative electrodes and can reduce the swelling rate of the electrochemical apparatus during cycling. It can be understood that when the positive electrode plate or the negative electrode plate is subjected to pressure treatment (for example, cold pressing), pressure during the pressure treatment affects the thickness and density of the positive electrode material layer or the negative electrode material layer. When the positive electrode material layer and the negative electrode material layer are the same in thickness, higher densities of the positive electrode material layer and the negative electrode material layer indicate higher pressure during the pressure treatment.

Thickness $d_3$ of the positive electrode material layer and thickness $d_4$ of the negative electrode material layer are not particularly limited in this application, provided that the objectives of this application can be achieved. For example, the thickness $d_3$ of the positive electrode material layer is 30 $\mu$m to 120 $\mu$m, and the thickness $d_4$ of the negative electrode material layer is 30 $\mu$m to 120 $\mu$m. In this application, the thickness $d_3$ of the positive electrode material layer and the thickness $d_4$ of the negative electrode material layer are the thickness of the single-sided positive electrode material layer provided on a positive electrode current collector and the thickness of the single-sided negative electrode material layer provided on a negative electrode current collector, respectively.

In an embodiment of this application, the thickness of the negative electrode plate obtained through disassembly of the electrochemical apparatus after the electrochemical apparatus is fully discharged is $MMC_0$, and the thickness of the negative electrode plate obtained through disassembly of the electrochemical apparatus after the electrochemical apparatus subjected to 50 cycles of charge and discharge is fully discharged is $MMC_x$, where ($MMC_x$ - $MMC_0$) $MMC_0$ $\times$ 100% $\leq$ 6.5%. For example, a value of ($MMC_x$ - $MMC_0$) $MMC_0$ $\times$ 100% may be 1%, 2%, 3%, 4%, 5%, 6%, 6.5%, or in any range therebetween. This means that for the electrochemical apparatus provided in this application after many cycles, the negative electrode plate has a relatively low swelling rate, so that the swelling rate of the electrochemical apparatus is relatively low.

In an embodiment of this application, a full width at half maximum of a diffraction peak of the (002) crystal plane of the negative electrode active material in the negative electrode plate obtained through disassembly of the electrochemical apparatus after the electrochemical apparatus is fully discharged is Wi, and a full width at half maximum of the diffraction peak of the (002) crystal plane of the negative electrode active material in the negative electrode plate obtained through disassembly of the electrochemical apparatus after the electrochemical apparatus subjected to 50 cycles of charge and discharge is fully discharged is $W_2$, where $W_1/W_2 \leq 1.06$. For example, a value of $W_1/W_2$ may be 1.01, 1.02, 1.03, 1.04, 1.05, 1.06, or in any range therebetween. Without wishing to be bound by any theory, when the value of $W_1/W_2$ is excessively large (for example, greater than 1.06), the density of the negative electrode material layer after many cycles of the electrochemical apparatus has an excessive change. This means that the negative electrode plate during delithiation and lithiation has relatively great volume change. In other words, the electrochemical apparatus has a relatively high swelling rate during cycling. Therefore, when the value of $W_1/W_2$ satisfies the foregoing range, the electrochemical apparatus has a relatively low swelling rate during cycling.

A process for preparing graphite in this application is well known to a person skilled in the art, and is not particularly limited in this application. For example, preparation steps of graphite may include but are not limited to the following steps: crushing a graphite precursor to a specific particle size by using a crushing device, then feeding crushed particles into a grading device to obtain particles with a specific particle size range, and then graphitizing the particles in a graphitization furnace to obtain required graphite. The graphite precursor is not particularly limited to any particle size or type in this application, provided that the objectives of this application can be achieved. For example, a median particle size of the graphite precursor may be 5 $\mu$m to 15 $\mu$m; and the graphite precursor may include but is limited to at least one of petroleum coke, needle coke, or sponge coke. Graphitization temperature, graphitization duration, and devices used are not particularly limited in this application, provided that the objectives of this application can be achieved. For example, the graphitization temperature is 2500°C to 3200°C, and the graphitization duration is 18 days to 30 days. A graphitization device may include but is not limited to at least one of an Acheson graphitization furnace, a lengthwise graphitization furnace, or a continuous graphitization furnace.

The surface of the negative electrode active material in this application may have amorphous carbon. A preparation method of the negative electrode active material with amorphous carbon on the surface is well known to a person skilled in the art, and is not particularly limited in this application. For example, the preparation method may include but is not limited to the following steps: mixing the negative electrode active material with an amorphous carbon precursor, and then carbonizing the resulting mixture in a carbonization furnace to obtain the negative electrode active material with amorphous carbon on the surface. Based on a total mass of the negative electrode active material and the amorphous carbon precursor, a mass percentage of the amorphous carbon precursor is 0.5% to 15%. It can be understood that as the percentage of the amorphous carbon precursor added during preparation increases, the percentage of the amorphous carbon in the prepared negative electrode active material increases and then tends to be a stable value. Carbonization temperature and carbonization duration are not particularly limited in this application, provided that the objectives of this application can be achieved. For example, the carbonization temperature is 500°C to 1300°C, and the carbonization duration is 1 day to 5 days. The amorphous carbon precursor is not particularly limited to any type in this application, provided that the objectives of this application can be achieved. For example, the amorphous carbon precursor may include but is not limited to at least one of citric acid, asphalt, heavy oil, furfural resin, epoxy resin, or phenolic resin.

In this application, the negative electrode plate further includes a negative electrode current collector. The negative electrode current collector is not particularly limited, provided that the objectives of this application can be achieved. For example, the negative electrode current collector may include copper foil, copper alloy foil, nickel foil, stainless steel foil, titanium foil, nickel foam, copper foam, a composite current collector, or the like. In this application, a thickness of the negative electrode current collector is not particularly limited, provided that the objectives of this application can be achieved. For example, the thickness of the negative electrode current collector is 4 $\mu$m to 12 $\mu$m.

In this application, the negative electrode material layer further includes a conductive agent. The conductive agent is not particularly limited in this application, provided that the objectives of this application can be achieved. For example, the conductive agent may include at least one of conductive carbon black (Super P), carbon nanotubes (CNTs), carbon fibers, flake graphite, Ketjen black, graphene, or the like. The carbon nanotubes may include at least one of single-walled carbon nanotubes or multi-walled carbon nanotubes. The carbon fiber may include at least one of vapor grown carbon fiber (VGCF) or carbon nanofiber.

In this application, the negative electrode material layer may further include a binder. The binder is not particularly limited in this application, provided that the objectives of this application can be achieved. For example, the binder may include at least one of polyacrylic acid, sodium polyacrylate, potassium polyacrylate, lithium polyacrylate, polyimide, polyvinyl alcohol, carboxymethyl cellulose, sodium carboxymethyl cellulose, polyimide, polyamideimide, styrene-butadiene rubber, or polyvinylidene fluoride.

Optionally, the negative electrode plate may further include a conductive layer, and the conductive layer is sandwiched between the negative electrode current collector and the negative electrode material layer. Composition of the conductive layer is not particularly limited, and the conductive layer may be a conductive layer commonly used in the art. For example, the conductive layer includes the foregoing conductive agent and binder.

The positive electrode plate in this application further includes a positive electrode current collector. The positive electrode current collector is not particularly limited, provided that the objectives of this application can be achieved. For example, the positive electrode current collector may include aluminum foil, aluminum alloy foil, a composite current collector, or the like. Thickness of the positive electrode current collector is not particularly limited in this application, provided that the objectives of this application can be achieved. For example, the thickness of the positive electrode current collector is 8 $\mu$m to 12 $\mu$m.

In this application, the positive electrode material layer includes a positive electrode active material. The positive electrode active material is not particularly limited, provided that the objectives of this application can be achieved. For example, the positive electrode active material may include at least one of composite oxides of lithium and a transition metal element. The transition metal element is not particularly limited, provided that the objectives of this application can be achieved. For example, the transition metal element may include at least one of nickel, manganese, cobalt, or iron. Specifically, the positive electrode active material may include at least one of lithium nickel cobalt manganate (811, 622, 523, 111), lithium nickel cobalt aluminate, lithium iron phosphate, lithium-rich manganese-based material, lithium cobaltate, lithium manganate, lithium manganese iron phosphate, or lithium titanate.

Optionally, the positive electrode plate may further include a conductive layer, and the conductive layer is sandwiched between the positive electrode current collector and the positive electrode material layer. Composition of the conductive layer is not particularly limited, and the conductive layer may be a conductive layer commonly used in the art. For example, the conductive layer includes the foregoing conductive agent and binder.

The electrochemical apparatus in this application further includes a separator. The separator in this application is not particularly limited, provided that the objectives of this application can be achieved. For example, a material of the separator may be but is not limited to at least one of polyethylene (PE), polypropylene (PP), polytetrafluoroethylene-based polyolefin (PO), polyester (for example, polyethylene terephathalate (PET)), cellulose, polyimide (PI), polyamide (PA), spandex, aramid, or the like. A type of the separator may include but is not limited to at least one of a woven film, a non-woven film (non-woven fabric), a microporous film, a composite film, a separator paper, a laminated film, a spinning film, or the like. The separator in this application may be of a porous structure. A pore size is not particularly limited, provided that the objectives of this application can be achieved. For example, the pore size is 0.01 $\mu$m to 1 $\mu$m. A thickness of the separator is not particularly limited in this application, provided that the objectives of this application can be achieved. For example, the thickness of the separator is 5 $\mu$m to 500 $\mu$m.

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, polypropylene non-woven fabric, polyethylene non-woven fabric, or polypropylene-polyethylene-polypropylene porous composite film can be used. Optionally, a surface treatment layer is provided on at least one surface of the substrate layer, and the surface treatment layer may be a polymer layer or an inorganic substance layer, or a layer formed by a mixture of a polymer and an inorganic substance.

For example, the inorganic substance layer includes an inorganic particle and a binder. The inorganic particle is not particularly limited, and for example, may be selected from at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be selected from, for example, a combination of one or more of polyvinylidene fluoride, vinylidene fluoride-hexafluoropropylene copolymer, polyamide, polyacrylonitrile, polyacrylate, polyacrylic acid, polyacrylate, polyacrylic acid, polyacrylate, polyvinylpyrrolidone, polyvinyl ether, polymethyl methacrylate, polytetrafluoroethylene, and polyhexafluoropropylene. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), or the like.

The electrochemical apparatus in this application further includes an electrolyte, where the electrolyte includes carboxylate, and the carboxylate includes at least one of ethyl acetate, propyl acetate, propyl propionate, or ethyl propionate.

In an embodiment of this application, based on the mass of the electrolyte, a mass percentage of carboxylate is 5% to 55%. For example, the mass percentage of the carboxylate may be 5%, 8%, 10%, 15%, 30%, 40%, 50%, 55%, or in any range therebetween. The electrolyte including the carboxylate, $(d_1/d_2 - 1) \times 100\% \leq 0.56\%$, and $3.3600 \leq d_1 \leq 3.3720$ help the electrolyte infiltrate the negative electrode plate, and the carboxylate within the foregoing range can further improve rate performance of the electrochemical apparatus.

In an embodiment of this application, the electrolyte further includes fluoroethylene carbonate (FEC) and 1,3-propane sultone (PS). When the electrolyte includes fluoroethylene carbonate and 1,3-propane sultone, $(d_1/d_2 - 1) \times 100\% \leq 0.56\%$, and $3.3600 \leq d_1 \leq 3.3720$, fluoroethylene carbonate and 1,3-propane sultone act together to form a protective film on the surface of the negative electrode active material. In addition, during cycling of the electrochemical apparatus, a new protective film may be formed on crushed negative electrode active material particles, reducing side reactions, which further decreases gas production of the electrochemical apparatus, improves the cycling performance of the electrochemical apparatus, and reduces impedance of the electrochemical apparatus.

In an embodiment of this application, based on the mass of the electrolyte, a mass percentage of fluoroethylene carbonate is greater than a mass percentage of 1,3-propane sultone. When the mass percentage of fluoroethylene carbonate is greater than the mass percentage of 1,3-propane sultone, the protective film formed on the surface of the negative electrode active material particles has better composition and structure, which enables the electrochemical apparatus to have better cycling performance and rate performance.

In an embodiment of this application, based on the mass of the electrolyte, the mass percentage of fluoroethylene carbonate is 1% to 10%.

In an embodiment of this application, based on the mass of the electrolyte, the mass percentage of 1,3-propane sultone is 0.1% to 4%.

In an embodiment of this application, the electrolyte further includes lithium difluorophosphate, where based on the mass of the electrolyte, a mass percentage of lithium difluorophosphate is 0.001% to 0.9%, preferably 0.01% to 0.9%, and further preferably 0.1% to 0.8%. When the electrolyte includes lithium difluorophosphate, components of the protective film on the surface of the negative electrode active material particles can be more diversified, reducing impedance of the protective film, which improves the cycling performance and rate performance of the electrochemical apparatus and reduces impedance of the electrochemical apparatus.

In an embodiment of this application, the electrolyte includes 1,3-propane sultone and lithium difluorophosphate, and the mass percentage of 1,3-propane sultone is greater than the mass percentage of lithium difluorophosphate.

In an embodiment of this application, the electrolyte includes fluoroethylene carbonate, 1,3-propane sultone, and lithium difluorophosphate.

The electrolyte in the electrochemical apparatus in this application includes a lithium salt and a non-aqueous solvent. In some embodiments of this application, the lithium salt may include at least one of $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, the lithium salt may be $LiPF_6$. Mass percentage of the lithium salt in the electrolyte is not particularly limited in this application and may be selected based on an actual situation, provided that the objectives of this application can be achieved.

The non-aqueous solvent may be dimethyl carbonate (DMC), diethyl carbonate (DEC), dipropyl carbonate (DPC), methyl propyl carbonate (MPC), ethylene propyl carbonate (EPC), ethyl methyl carbonate (EMC), ethylene carbonate (EC), propylene carbonate (PC), butylene carbonate (BC), vinyl ethylene carbonate (VEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, and a combination thereof.

Mass percentage of the non-aqueous solvent in the electrolyte is not particularly limited in this application and may be selected based on an actual situation, provided that the objectives of this application can be achieved.

A process for preparing the electrochemical apparatus is well known to a person skilled in the art, and is not particularly limited in this application. For example, the electrochemical apparatus may be manufactured in the following process: the positive electrode plate, the separator, and the negative electrode plate are stacked in sequence, and are put into a housing after operations such as winding and folding as needed. The housing is injected with the electrolyte and then sealed. In addition, if necessary, an overcurrent prevention element, a guide plate, and the like may be placed in the housing to prevent pressure increase, overcharge, and over discharge in the electrochemical apparatus.

A second aspect of this application provides an electronic apparatus, including the electrochemical apparatus according to the foregoing embodiments of this application.

The electronic apparatus in this application is not particularly limited, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

This application provides an electrochemical apparatus and an electronic apparatus. The electrochemical apparatus includes a negative electrode plate, where the negative electrode plate includes a negative electrode material layer, and the negative electrode material layer includes a negative electrode active material, so that an interplanar spacing $d_1$ of (002) crystal plane of the negative electrode active material and an interplanar spacing $d_2$ of the (002) crystal plane of the negative electrode active material in the negative electrode material layer satisfy $(d_1/d_2 - 1) \times 100\% \leq 0.56\%$ and $3.3600\,nm \leq d_1 \leq 3.3720\,nm$, effectively reducing a swelling rate of the negative electrode plate in the electrochemical apparatus during cycling, thereby reducing a swelling rate of the electrochemical apparatus during cycling.

**Examples**

**Test method and device:**

Test of interplanar spacing and full width at half maximum (FWHM) of (002) crystal plane:
An X-ray diffractometer (XRD) Bruker D8 ADVANCE was used to test an interplanar spacing of (002) crystal plane of a negative electrode active material or a negative electrode active material in a negative electrode material layer, where a test target material was Cu K$\alpha$, voltage was 40 KV, current was 40 mA, a scanning angle range was 5° to 80°, a scanning step size was 0.00836°, and duration of each step was 0.3s.

$$\text{Interplanar spacing} = \lambda/2/\sin\theta,$$

where $\theta$ is an angle where a diffraction peak of the (002) crystal plane is at the maximum peak intensity, and $\lambda$ is a wavelength.

FWHM is the full width at 50% between the minimum peak intensity and the maximum peak intensity of the diffraction peak of the (002) crystal plane.

FIG. 1 is an X-ray diffraction pattern of a negative electrode active material in Example 1 of this application, where a diffraction peak in the pattern is the diffraction peak of the (002) crystal plane of the negative electrode active material, a corresponding value of $\theta$ is 26.4, and the full width at half maximum is 0.285.

Testing process of interplanar spacing $d_1$ of negative electrode active material powder:
The lithium-ion battery was discharged to a voltage of 3.0 V and disassembled to obtain the negative electrode plate, the negative electrode material layer was removed from the negative electrode current collector, placed to a box furnace in an air atmosphere, and then sintered for 4 hours at 400°C to obtain the negative electrode active material. The interplanar spacing and full width at half maximum of the negative electrode active material were determined through the above test method.

Testing process of interplanar spacing $d_2$ of negative electrode active material in negative electrode material layer:
A full discharge process was that the lithium-ion battery was discharged to a theoretical minimum voltage at 0.5C and left standing for 30min, discharged to a minimum voltage at 0.2C and left standing for 30min, and discharged to a minimum voltage at 50 mA and left standing for 30min, until a voltage change value was $\leq 0.05$ V The lithium-ion battery was disassembled to obtain the negative electrode plate. After the negative electrode material layer was removed from the negative electrode current collector, the interplanar spacing and full width at half maximum of the negative electrode active material in the negative electrode material layer were determined through the above test method.

**Amorphous carbon percentage test:**

A thermogravimetric analyzer (STA449F3-QMS403C, NETZSCH) was used to test the mass of the amorphous carbon on the surface of the negative electrode active material. The specific test method was as follows: an appropriate amount of the negative electrode active material including the amorphous carbon was taken and placed into a crucible, and heated up from 30°C to 1200°C at a rate of 5°C /min in the air atmosphere, so as to determine an active reaction temperature of the negative electrode active material (namely, a reaction temperature T1 when the negative electrode active material started to have mass loss). After the active reaction temperature was determined, an appropriate amount of the negative electrode active material including the amorphous carbon was weighed and placed in the crucible, and heated up from 30°C to T1 at a rate of 5°C /min in a nitrogen atmosphere. At this temperature, the mass of the negative electrode active material was recorded as $m_0$, the nitrogen atmosphere was changed to the air atmosphere, and the mass of the negative electrode active material was recorded as mi until the mass of the sample tested by the thermogravimetric analyzer no longer changed. The required reaction was generally less than or equal to 12h, and preferably 6h, and the determined mass loss was the mass of the amorphous carbon, where $m=m_0 - m_1$.

**Porosity test of negative electrode material layer:**

The lithium-ion battery was discharged to a fully discharged state and then disassembled to obtain the negative electrode plate. The negative electrode material layer was prepared into complete wafers, where the volume of each sample was about 0.35 $cm^3$. In each example or comparative example, 30 samples were tested, and the porosity of the negative electrode material layer was determined in accordance with the GB/T 24586-2009 Iron ores - Determination of apparent density, true density and porosity.

**Conductivity test of negative electrode material layer:**

A four-probe membrane impedance test method was used to determine the conductivity of the negative electrode material layer. The test process was that a tip of the probe was pressed against the negative electrode material layer under test to determine the conductivity of the negative electrode material layer.

**Test of lithium-ion liquid-phase transfer impedance (Rion):**

The lithium-ion battery was connected to an electrochemical workstation (Bio-Logic VMP3B) for testing, where a testing frequency was 30 mHz to 50 kHz, and an amplitude was 5 mV. Data was collected to obtain a lithium-ion liquid-phase transfer impedance value.

**Test of discharge capacity retention rate of lithium-ion battery at 2C:**

After being left standing for 5min at 25°C, the lithium-ion battery was constant-current charged to 4.45 V at 0.7C, constant-voltage charged to 0.05C at 4.45 V, left standing for 5min, constant-current discharged to 3.0 V at 0.5C, and left standing for 5min. The above charge and discharge process was repeated. The lithium-ion battery was discharged at 0.1C, and the discharge capacity of the lithium-ion battery at 0.1C was recorded. Then, the lithium-ion battery was discharged at 2C, and the discharge capacity of the lithium-ion battery at 2C was recorded. The discharge capacity retention rate of the lithium-ion battery at 2C was calculated based on the following formula:

Discharge capacity retention rate at 2C = discharge capacity at 2C/discharge capacity at 0.1C $\times$ 100%.

**Determining of lithium precipitation of lithium-ion battery:**

The lithium-ion battery was left standing for 5min at 25°C. According to arrangements of the examples or comparative examples, the lithium-ion battery in the examples or comparative examples was constant-current charged to 4.45 V at 2C, constant-voltage charged to 0.05C at 4.45 V, and left standing for 5min. Then, the lithium-ion battery was constant-current discharged to a fully discharged state (3.0 V) at 0.5C, and left standing for 5min. The above charge and discharge process was repeated for 10 times. The battery was fully charged, disassembled under a drying condition, and then photographed to record the state of the negative electrode plate.

The lithium-ion battery was left standing for 5min at 0°C. According to the arrangements of the examples or comparative examples, the lithium-ion battery in the examples or comparative examples was constant-current charged to 4.45 V at 0.8C, constant-voltage charged to 0.05C at 4.45 V, and left standing for 5min. Then, the lithium-ion battery was constant-current discharged to a fully discharged state (3.0 V) at 0.5C, and left standing for 5min. The above charge and discharge process was repeated for 10 times. The battery was fully charged, disassembled under a drying condition, and then photographed to record the state of the negative electrode plate.

Determination of lithium precipitation degree of lithium-ion battery according to the following standard:
When the negative electrode plate disassembled is golden yellow as a whole, very few parts can be observed as gray, and an area of a gray region accounts for less than 2% of a total area of the negative electrode plate, it is determined that the lithium-ion battery has no lithium precipitation.

When most of the negative electrode plate disassembled is golden yellow, some positions can be observed as gray, and the area of the gray region accounts for 2% to 20% of the total area of the negative electrode plate, it is determined that the lithium-ion battery has slight lithium precipitation.

When the negative electrode plate disassembled is gray as a whole, some positions can be observed as golden yellow, and the area of the gray region accounts for 20% to 60% of the total area of the negative electrode plate, it is determined that the lithium-ion battery has lithium precipitation.

When the negative electrode plate disassembled is gray as a whole and the area of the gray region accounts for more than 60% of the total area of the negative electrode plate, it is determined that the lithium-ion battery has severe lithium precipitation.

**Cycling swelling rate test for lithium-ion battery:**

After being left standing for 5min at 25°C, the lithium-ion battery was constant-current charged to be in a fully charged state (4.45 V) at 0.7C, constant-voltage charged to 0.05C in the fully charged state, and left standing for 5min. An MMC (maximum material condition) test method was used to determine thicknesses at three positions of the lithium-ion battery, where the thicknesses were averaged and recorded as $MMC_0$. Then, the lithium-ion battery was constant-current discharged to the fully discharged state at 0.5C, and left standing for 5min. The above charge and discharge cycle was repeated for 50 times, the thicknesses at the three positions of the lithium-ion battery were tested each time, where the thicknesses were averaged as $MMC_x$ (x represents the number of cycles).

A cycling swelling rate of the lithium-ion battery at 25°C was calculated based on the following formula:

$$\text{Cycling swelling rate } (25°C) = (MMC_x - MMC_0)/MMC_0 \times 100\%.$$

In the MMC test method, a micrometer tester (manufactured by Mitutoyo, model: MDC-25SX) was used to determine a thickness of a negative electrode tab of the lithium-ion battery. Thicknesses at three different positions were determined for each sample, and then averaged and recorded as the MMC thickness.

**Test of direct-current resistance (DCR) of lithium-ion battery:**

At 25°C, the lithium-ion battery was constant-current charged to 4.45 V at 1.5C, then constant-voltage charged to 0.05C at 4.45 V, and left standing for 30 minutes. The lithium-ion battery was discharged at 0.1C for 10 seconds, and a voltage value was recorded as Ui. The lithium-ion battery was discharged at 1C for 360 seconds, and a voltage value was recorded as $U_2$. The charge and discharge steps were repeated for 5 times.

Direct-current resistance of the lithium-ion battery at 25°C was calculated according to the following formula:
$R = (U_2 - U_1)/(1C - 0.1C)$, where "1C" refers to a current at which a lithium-ion battery is fully discharged in one hour.

A test method of direct-current resistance of the lithium-ion battery at 0°C was the same as the above method except that an operating temperature was 0°C.

Unless otherwise specified, DCR in this application refers to direct-current resistance of the lithium-ion battery in a 10% state of charge (SOC).

**Example 1-1**

<Preparation of negative electrode active material>

The graphite precursor (needle coke) was placed in a jaw crusher and crushed into particles with a median particle size $D_v50$ of 1 mm, and then crushed particles (needle coke) were crushed and graded through a jet mill to obtain particles with a median particle size $D_v50$ of 5 $\mu$m to 12 $\mu$m and $D_v99 \leq 30$ $\mu$m. The crushed particles were graphitized at 3000°C for 20 days in a lengthwise graphitization furnace to obtain the primary particles of the negative electrode active material.

Preparation of secondary particles: in the foregoing process, the graphite precursor was crushed and graded to obtain particles with a particle size $D_v50$ of 8 $\mu$m, the particles were mixed with asphalt at a mass ratio of 10:1, and the resulting mixture was graphitized at 3000°C for 20 days in the graphitization furnace to obtain the secondary particles of the negative electrode active material.

The after-graphitization primary particles and secondary particles were mixed at a ratio of 3:7 to obtain the composite negative electrode active material in Example 1-1.

<Preparation of negative electrode plate>

The prepared negative electrode active material, styrene-butadiene rubber, and sodium carboxymethyl cellulose were fully stirred and mixed in a deionized water solvent at a mass ratio of 95:2:3 to prepare a slurry with a solid content of 45 wt%, and the slurry was well stirred. The slurry was uniformly applied on two surfaces of the negative electrode current collector copper foil that had been coated with a 1.5 $\mu$m thick carbon block layer, the negative electrode current collector was 10 $\mu$m thick and dried at 110°C to obtain the negative electrode plate with two sides coated with the negative electrode material layer, where a coating of the single-sided negative electrode material layer was 90 $\mu$m thick. Then, the negative electrode material layer was subjected to pressure treatment under a pressure of 100 KN at a rate of 14 m/min, the density of the negative electrode material layer was 1.40 g/cc, the average thickness $d_4$ of the single-sided negative electrode material layer after the pressure treatment was 76.5 $\mu$m, and the negative electrode plate was cut into a size of 74 mm $\times$ 867 mm for use. The density of the negative electrode material layer was controlled by controlling the pressure in the pressure treatment. In other words, the density of the negative electrode material layer can reflect the pressure in the pressure treatment.

<Preparation of positive electrode plate>

Lithium cobaltate as positive electrode active material, acetylene black, and polyvinylidene fluoride (PVDF) were mixed at a mass ratio of 96:2:2, N-methylpyrrolidone (NMP) was added as a solvent to prepare a slurry with a solid percentage of 50 wt%, and the slurry was well stirred. The slurry was uniformly applied on two surfaces of an aluminum foil positive electrode current collector with a thickness of 10 $\mu$m and dried at 90°C, and the aluminum foil was cold pressed to obtain the positive electrode plate with two sides coated with the positive electrode active materials, where a coating of the single-sided positive electrode material layer was 80 $\mu$m thick. Then, the positive electrode material layer was subjected to pressure treatment under a pressure of 100 KN, the density of the negative electrode material layer was 3.95 g/cc, the average thickness $d_3$ of the single-sided negative electrode material layer after the pressure treatment was 52 $\mu$m, and the positive electrode plate was cut into a size of 74 mm $\times$ 867 mm and then welded with tabs for use.

<Preparation of electrolyte>

In an argon atmosphere with a water content less than 10 ppm, organic solvents ethylene carbonate (EC), diethyl carbonate (DEC), and propylene carbonate (PC) were mixed at a mass ratio of EC:DEC:PC=3:4:3, then a lithium salt lithium hexafluorophosphate (LiPF$_6$) was added to the organic solvents for dissolving and uniform mixing, and then fluoroethylene carbonate and succinonitrile were added to the resulting mixture for dissolving and uniform mixing, to obtain the electrolyte. Based on a mass of the electrolyte, the mass percentages of LiPF$_6$, fluoroethylene carbonate, and succinonitrile were 12.5%, 3%, and 2%, respectively; and the rest was the organic solvents.

<Preparation of separator>

A polyethylene (PP) film (provided by Celgard) with a thickness of 7 $\mu$m was used.

<Preparation of lithium-ion battery>

The prepared positive electrode plate, separator, and negative electrode plate were stacked in sequence, so that the separator was sandwiched between the positive electrode plate and the negative electrode plate for separation. Then the resulting stack was wound to obtain an electrode assembly. The electrode assembly was put into an aluminum-plastic film packaging bag which was filled with the electrolyte after drying, followed by processes such as vacuum packaging, standing, formation, and shaping to obtain the lithium-ion battery.

**Example 1-2** to **Example 1-4** were the same as Example 1-1 except that the pressure in the pressure treatment of the negative electrode plate was adjusted to make $d_2$ and the density of the negative electrode material layer be as shown in Table 1.

In **Example 1-5,** the negative electrode active material obtained in preparation steps of <preparation of negative electrode active material> was mixed with the amorphous carbon precursor asphalt, and the resulting mixture was placed in a carbonization furnace and carbonized for 8h at 800°C to obtain the negative electrode active material including the amorphous carbon, where a mass percentage of the amorphous carbon was 0.5%. In addition, the negative electrode active material graphite obtained in the preparation steps of <preparation of negative electrode plate> was replaced with the negative electrode active material including the amorphous carbon. Example 1-5 was the same as Example 1-1 except for the above description.

**Example 1-6** to **Example 1-8** were the same as Example 1-5 except that the pressure in the pressure treatment of the negative electrode plate was adjusted to make $d_2$ be as shown in Table 1.

**Example 1-9** to **Example 1-16** were the same as Example 1-5 except that the median particle size and graphitization temperature of the graphite precursor and the pressure in the pressure treatment of the negative electrode plate were adjusted to make $d_1$ and $d_2$ be as shown in Table 1.

**Example 2-1** to **Example 2-14** were the same as Example 1-6 except that the type of the amorphous carbon precursor and the mass percentage of the amorphous carbon were adjusted according to Table 2.

In **Example 3-1,** the graphite obtained in the preparation steps of <preparation of negative electrode plate> in Example 1-1 was used as the primary particles, then the primary particles were mixed with the asphalt at a mass ratio of 10:1, and the resulting mixture was carbonized for 8h at 1000°C in the carbonization furnace to obtain after-carbonization primary particles. The after-carbonization primary particles were mixed with the secondary particles prepared in Example 1-1 at a mass ratio of 3:7 to obtain the composite negative electrode active material. In the preparation steps of <preparation of negative electrode plate>, the coating of the single-sided negative electrode material layer of the composite negative electrode active material was 90 $\mu$m thick during preparation of the negative electrode material layer. In the preparation steps of <preparation of positive electrode plate>, the coating of the single-sided positive electrode material layer of the positive electrode active material was 80 $\mu$m thick during preparation of the positive electrode material layer. After the positive electrode plate and the negative electrode plate were subjected to the pressure treatment, the average thickness $d_4$ of the single-sided negative electrode material layer was 62.5 $\mu$m, and the average thickness $d_3$ of the single-sided positive electrode material layer was 52 $\mu$m. Example 3-1 was the same as Example 1-1 except for the above description.

**Example 3-2** and **Example 3-3** were the same as Example 3-1 except that the pressure in the pressure treatment of the negative electrode plate was adjusted to make the density of the negative electrode material layer, the density of the positive electrode material layer, a value of $d_3$, a value of $d_4$, and a value of $d_4/d_3$ be as shown in Table 3, and that the number percentages of the primary particles and secondary particles were adjusted to be as shown in Table 3.

**Example 3-4** to **Example 3-12** were the same as Example 3-1 except that the number percentages of the primary particles and secondary particles and the pressure in the pressure treatment of the positive electrode plate and negative electrode plate were adjusted to make the density of the negative electrode material layer, the density of the positive electrode material layer, the value of $d_3$, the value of $d_4$, and the value of $d_4/d_3$ be as shown in Table 3, and that the number percentages of the primary particles and secondary particles were adjusted to be as shown in Table 3.

**Example 4-1** to **Example 4-20** were the same as Example 1-5 except that the preparation parameters of the electrolyte were adjusted according to Table 4.

**Comparative Example 1-1** was the same as Example 1-1 except that the median particle size and graphitization temperature of the graphite precursor were adjusted according to Table 1 to make $d_1$ be as shown in Table 1.

**Comparative Example 1-2** was the same as Example 1-8 except that the median particle size and graphitization temperature of the graphite precursor were adjusted according to Table 1 to make $d_1$ be as shown in Table 1.

The preparation parameters and performance tests in Examples and Comparative Examples are shown in Table 1 to Table 4.

# Table 1

| | Median particle size of graphite precursor (μm) | Graphitization temperature (°C) | Amorphous carbon precursor | Mass percentage of amorphous carbon (%) | $d_1$ (Å) | $d_2$ (Å) | Density of negative electrode material layer (g/cc) | $(d_1/d_2 - 1) \times 100\%$ (%) | $L_1 - L_2$ (μm) | Status of lithium precipitation at 2C at 25°C |
|---|---|---|---|---|---|---|---|---|---|---|
| Example 1-1 | 11 | 3000 | / | / | 3.3600 | 3.3582 | 1.40 | 0.05 | 106 | Slight lithium precipitation |
| Example 1-2 | 11 | 3000 | / | / | 3.3600 | 3.3554 | 1.50 | 0.14 | 113 | Slight lithium precipitation |
| Example 1-3 | 11 | 3000 | / | / | 3.3600 | 3.3512 | 1.60 | 0.26 | 122 | Slight lithium precipitation |
| Example 1-4 | 11 | 3000 | / | / | 3.3600 | 3.3465 | 1.75 | 0.40 | 135 | Slight lithium precipitation |
| Example 1-5 | 11 | 3000 | Asphalt | 0.5 | 3.3640 | 3.3612 | 1.40 | 0.08 | 103 | Slight lithium precipitation |
| Example 1-6 | 11 | 3000 | Asphalt | 0.5 | 3.3640 | 3.3583 | 1.50 | 0.17 | 110 | Slight lithium precipitation |

| | Median particle size of graphite precursor (μm) | Graphitization temperature (°C) | Amorphous carbon precursor | Mass percentage of amorphous carbon (%) | $d_1$ (Å) | $d_2$ (Å) | Density of negative electrode material layer (g/cc) | $(d_1/d_2 - 1) \times 100\%$ (%) | $L_1 - L_2$ (μm) | Status of lithium precipitation at 2C at 25°C |
|---|---|---|---|---|---|---|---|---|---|---|
| Example 1-7 | 11 | 3000 | Asphalt | 0.5 | 3.3640 | 3.3541 | 1.60 | 0.30 | 117 | Slight lithium precipitation |
| Example 1-8 | 11 | 3000 | Asphalt | 0.5 | 3.3640 | 3.3495 | 1.75 | 0.43 | 127 | No lithium precipitation |
| Example 1-9 | 9 | 3000 | Asphalt | 0.5 | 3.3680 | 3.3651 | 1.40 | 0.09 | 98 | No lithium precipitation |
| Example 1-10 | 9 | 3000 | Asphalt | 0.5 | 3.3680 | 3.3611 | 1.50 | 0.21 | 101 | No lithium precipitation |
| Example 1-11 | 9 | 3000 | Asphalt | 0.5 | 3.3680 | 3.3555 | 1.60 | 0.37 | 111 | No lithium precipitation |
| Example 1-12 | 9 | 3000 | Asphalt | 0.5 | 3.3680 | 3.3517 | 1.75 | 0.49 | 121 | No lithium precipitation |
| Example 1-13 | 9 | 2800 | Asphalt | 0.5 | 3.3720 | 3.3681 | 1.40 | 0.12 | 87 | No lithium precipitation |
| Example 1-14 | 9 | 2800 | Asphalt | 0.5 | 3.3720 | 3.3643 | 1.50 | 0.23 | 95 | No lithium precipitation |

| | Median particle size of graphite precursor (μm) | Graphitization temperature (°C) | Amorphous carbon precursor | Mass percentage of amorphous carbon (%) | $d_1$ (Å) | $d_2$ (Å) | Density of negative electrode material layer (g/cc) | $(d_1/d_2 - 1) \times 100\%$ (%) | $L_1 - L_2$ (μm) | Status of lithium precipitation at 2C at 25°C |
|---|---|---|---|---|---|---|---|---|---|---|
| Example 1-15 | 9 | 2800 | Asphalt | 0.5 | 3.3720 | 3.359 | 1.60 | 0.39 | 105 | No lithium precipitation |
| Example 1-16 | 9 | 2800 | Asphalt | 0.5 | 3.3720 | 3.3532 | 1.75 | 0.56 | 113 | No lithium precipitation |
| Comparative Example 1 | 11 | 3400 | / | / | 3.3557 | 3.3532 | 1.40 | 0.075 | 153 | Lithium precipitation |
| Comparative Example 2 | 9 | 2500 | Asphalt | 0.5 | 3.3750 | 3.358 | 1.75 | 0.596 | 146 | Lithium precipitation |

Note: "/" in Table 1 means that a corresponding preparation parameter does not exist.

**Table 2**

| | Amorphous carbon precursor | Mass percentage of amorphous carbon (%) | Conductivity of negative electrode material layer (S/cm) | DCR at 0°C (mohm) | Lithium precipitation at 2C at 25°C | Discharge capacity retention rate at 2C (%) |
|---|---|---|---|---|---|---|
| Example 1-6 | Asphalt | 0.5 | 68.0 | 217.1 | Slight lithium precipitation | 89.1 |
| Example 2-1 | Asphalt | 1.5 | 64.9 | 215.1 | No lithium precipitation | 90.0 |
| Example 2-2 | Asphalt | 2.5 | 61.7 | 211.1 | No lithium precipitation | 91.2 |
| Example 2-3 | Asphalt | 3.5 | 53.5 | 202.8 | No lithium precipitation | 92.6 |
| Example 2-4 | Asphalt | 4.5 | 46.5 | 189.1 | No lithium precipitation | 93.9 |
| Example 2-5 | Asphalt | 5.0 | 35.7 | 181.9 | No lithium precipitation | 93.7 |
| Example 2-6 | Phenolic resin | 0.5 | 57.5 | 206.5 | No lithium precipitation | 91.8 |
| Example 2-7 | Phenolic resin | 1.5 | 51.5 | 195.1 | No lithium precipitation | 92.4 |

| | Amorphous carbon precursor | Mass percentage of amorphous carbon (%) | Conductivity of negative electrode material layer (S/cm) | DCR at 0°C (mohm) | Lithium precipitation at 2C at 25°C | Discharge capacity retention rate at 2C (%) |
|---|---|---|---|---|---|---|
| Example 2-8 | Phenolic resin | 2.5 | 41.7 | 186.8 | No lithium precipitation | 93.8 |
| Example 2-9 | Phenolic resin | 3.5 | 24.6 | 178.1 | No lithium precipitation | 94.9 |
| Example 2-10 | Phenolic resin | 5.0 | 15.6 | 180.8 | No lithium precipitation | 94.0 |
| Example 2-11 | Citric acid | 3.5 | 34.2 | 184.9 | No lithium precipitation | 94.4 |
| Example 2-12 | Furfural resin | 3.5 | 21.3 | 177.3 | No lithium precipitation | 94.7 |
| Example 2-13 | Epoxy resin | 3.5 | 27.8 | 180.5 | No lithium precipitation | 94.3 |
| Example 2-14 | Heavy oil | 3.5 | 37.2 | 185.5 | No lithium precipitation | 94.1 |

**Table 3**

| | Density of negative electrode material layer (g/cc) | Density of positive electrode material layer (g/cc) | The thickness of negative electrode material layer $d_4$ (μm) | The thickness of positive electrode material layer $d_3$ (μm) | $d_4/d_3$ | Number percentage of primary particles (%) | Number percentage of secondary particles (%) | $W_1/W_2$ | Rion at 0°C (mohm) | Porosity of negative electrode plate after 50 cycles (%) |
|---|---|---|---|---|---|---|---|---|---|---|
| Example 1-1 | 1.40 | 3.95 | 76.5 | 52 | 1.5 | 30 | 70 | 1.01 | 4.8 | 35.8 |
| Example 3-1 | 1.75 | 3.95 | 62.5 | 52 | 1.2 | 30 | 70 | 1.06 | 8.4 | 25.6 |
| Example 3-2 | 1.55 | 3.95 | 69.5 | 52 | 1.3 | 30 | 70 | 1.045 | 7.9 | 27 |
| Example 3-3 | 1.4 | 3.95 | 76.5 | 52 | 1.5 | 30 | 70 | 1.017 | 3.9 | 43.5 |
| Example 3-4 | 1.60 | 4.00 | 67.5 | 51 | 1.3 | 1 | 99 | 1.033 | 6.5 | 32.8 |
| Example 3-5 | 1.60 | 4.00 | 67.5 | 51 | 1.3 | 20 | 80 | 1.039 | 7.1 | 29.5 |
| Example 3-6 | 1.60 | 4.00 | 67.5 | 51 | 1.3 | 50 | 50 | 1.051 | 9.5 | 25.3 |
| Example 3-7 | 1.40 | 4.25 | 77.5 | 48.5 | 1.6 | 1 | 99 | 1.025 | 2.4 | 45 |
| Example 3-8 | 1.40 | 4.25 | 77.5 | 48.5 | 1.6 | 20 | 80 | 1.03 | 3.8 | 41.4 |
| Example 3-9 | 1.40 | 4.25 | 77.5 | 48.5 | 1.6 | 50 | 50 | 1.042 | 7 | 34.7 |

| | Example 3-10 | Example 3-11 | Example 3-12 |
|---|---|---|---|
| Density of negative electrode material layer (g/cc) | 1.55 | 1.80 | 1.25 |
| Density of positive electrode material layer (g/cc) | 4.00 | 3.55 | 4.35 |
| The thickness of negative electrode material layer $d_4$ (μm) | 70.5 | 61 | 86 |
| The thickness of positive electrode material layer $d_3$ (μm) | 51 | 57 | 47.5 |
| $d_4/d_3$ | 1.4 | 1.1 | 1.8 |
| Number percentage of primary particles (%) | 70 | 30 | 30 |
| Number percentage of secondary particles (%) | 30 | 70 | 70 |
| $W_1/W_2$ | 1.1 | 1.23 | 1.01 |
| Rion at 0°C (mohm) | 15.2 | 20.3 | 14.3 |
| Porosity of negative electrode plate after 50 cycles (%) | 23.1 | 15.6 | 50.5 |

**Table 4**

| | Carboxylate | | Percentage of FEC (%) | Percentage of PS (%) | Percentage of lithium difluorophosphate (%) | DCR at 25°C (mohm) | Lithium precipitation at 0.8C at 0°C | Discharge capacity retention rate at 2C (%) |
|---|---|---|---|---|---|---|---|---|
| | Type | Percentage (%) | | | | | | |
| Example 1-5 | / | / | 3 | / | / | 83.2 | Slight lithium precipitation | 73.2 |
| Example 4-1 | Propyl propionate | 3 | 3 | / | / | 75.0 | Slight lithium precipitation | 78.7 |
| Example 4-2 | Propyl propionate | 5 | 3 | / | / | 72.2 | Slight lithium precipitation | 80.1 |
| Example 4-3 | Propyl propionate | 10 | 3 | / | / | 70.1 | Slight lithium precipitation | 81.3 |
| Example 4-4 | Propyl propionate | 20 | 3 | / | / | 68.0 | No lithium precipitation | 82.5 |
| Example 4-5 | Propyl propionate | 40 | 3 | / | / | 66.9 | No lithium precipitation | 83.3 |
| Example 4-6 | Propyl propionate | 50 | 3 | / | / | 64.4 | Slight lithium precipitation | 76.0 |
| Example 4-7 | Propyl propionate + ethyl propionate | 20+15 | 3 | / | / | 67.2 | No lithium precipitation | 84.7 |
| Example 4-8 | Propyl propionate + ethyl acetate | 25+15 | 3 | / | / | 65.5 | No lithium precipitation | 85.5 |

| | Carboxylate | | Percentage of FEC (%) | Percentage of PS (%) | Percentage of lithium difluorophosphate (%) | DCR at 25°C (mohm) | Lithium precipitation at 0.8C at 0°C | Discharge capacity retention rate at 2C (%) |
| | Type | Percentage (%) | | | | | | |
|---|---|---|---|---|---|---|---|---|
| Example 4-9 | Propyl propionate | 20 | 3 | 0.5 | / | 64.18 | No lithium precipitation | 87.0 |
| Example 4-10 | Propyl propionate | 20 | 3 | 1 | / | 59.02 | No lithium precipitation | 87.6 |
| Example 4-11 | Propyl propionate | 20 | 3 | 2 | / | 58.38 | No lithium precipitation | 88.4 |
| Example 4-12 | Propyl propionate | 20 | 3 | 3 | / | 58.21 | No lithium precipitation | 89.0 |
| Example 4-13 | Propyl propionate | 20 | 3 | 4 | / | 57.24 | No lithium precipitation | 90.0 |
| Example 4-14 | Propyl propionate | 20 | 5 | 3 | / | 54.64 | No lithium precipitation | 90.4 |
| Example 4-15 | Propyl propionate | 20 | 3 | 2 | 0.05 | 53.65 | No lithium precipitation | 91.3 |
| Example 4-16 | Propyl propionate | 20 | 3 | 2 | 0.1 | 53 | No lithium precipitation | 92.6 |
| Example 4-17 | Propyl propionate | 20 | 3 | 2 | 0.3 | 52.78 | No lithium precipitation | 93.4 |
| Example 4-18 | Propyl propionate | 20 | 3 | 2 | 0.5 | 52.18 | No lithium precipitation | 95.0 |

| | Carboxylate | | Percentage of FEC (%) | Percentage of PS (%) | Percentage of lithium difluorophosphate (%) | DCR at 25°C (mohm) | Lithium precipitation at 0.8C at 0°C | Discharge capacity retention rate at 2C (%) |
|---|---|---|---|---|---|---|---|---|
| | Type | Percentage (%) | | | | | | |
| Example 4-19 | Propyl propionate | 20 | 3 | 2 | 0.8 | 50.08 | No lithium precipitation | 95.8 |
| Example 4-20 | Propyl propionate | 20 | 3 | 2 | 1 | 49.71 | No lithium precipitation | 97.7 |

Note: "/" in Table 4 means that a corresponding preparation parameter does not exist.

Refer to Table 1. It can be seen from Example 1-1 to Example 1-16, and from Comparative Example 1 and Comparative Example 2 that a value of $(d_1/d_2 - 1) \times 100\%$ and a value of $d_1$ being within the ranges in this application can reduce a volume change of the lithium-ion battery during cycling, that is, a swelling rate of the lithium-ion battery during cycling is reduced. The lithium-ion battery obtained in this application has excellent swelling performance.

It can be seen from Example 1-1 to Example 1-4 that when $d_1$ remains unchanged, the density of the negative electrode material layer tends to decrease gradually with the increase of $d_2$, and the volume change of the lithium-ion battery during cycling tends to decrease, that is, the swelling rate of the lithium-ion battery during cycling is reduced. It can be seen from Example 1-5, Example 1-9, and Example 1-13 that when the density of the negative electrode material layer remains unchanged, $d_2$ increases with the increase of $d_1$, and the volume change of the lithium-ion battery during cycling tends to decrease. It can be seen that $d_1$ and $d_2$ being controlled within the ranges in this application is conducive to improving the swelling performance of the lithium-ion battery.

It can be seen from Example 1 and Comparative Example 1 that when the value of $(d_1/d_2 - 1) \times 100\%$ is within the range in this application and $d_1$ is not within the range in this application, the obtained lithium-ion battery has slightly reduced lithium precipitation, but still has relatively large volume change during cycling, that is, the swelling rate of the lithium-ion battery during cycling is relatively large. It can be seen from Example 1-8 and Comparative Example 2 that when the value of $d_1$ and the value of $(d_1/d_2 - 1) \times 100\%$ are not within the ranges in this application, the obtained lithium-ion battery during cycling has relatively large volume change and deteriorated degree of lithium precipitation, that is, the lithium-ion battery during cycling has relatively large swelling rate and undesirable cycling performance. This means that only when both the value of $(d_1/d_2 - 1) \times 100\%$ and $d_1$ satisfy the ranges in this application, the lithium-ion battery with excellent swelling performance and cycling performance can be obtained.

Refer to Table 2. It can be seen from Example 1-6 and Example 2-1 to Example 2-14 that when the surface of the negative electrode active material has amorphous carbon, the obtained lithium-ion battery has both low impedance and high capacity retention rate, and the lithium precipitation is reduced.

It can be seen from Example 1-6 and Example 2-1 to Example 2-5 that when a mass percentage of the amorphous carbon is 0.1% to 5%, the conductivity of the negative electrode plate decreases to some extent, the direct-current resistance is reduced, the lithium precipitation of the lithium-ion battery is reduced, and the capacity retention rate thereof is increased. By comparing Example 2-4 and Example 2-5, when the percentage of the amorphous carbon is 5%, the conductivity of the negative electrode material layer decreases obviously, and the capacity retention rate is also affected to some extent. It can be seen from Example 1-6 and Example 2-1 to Example 2-14 that the amorphous carbon can be prepared with different precursors, which can reduce the lithium precipitation of the lithium-ion battery and increase the capacity retention rate thereof.

Refer to Table 3. It can be seen from Example 3-1 to Example 3-10 that when the number percentages of the primary particles and secondary particles are within the ranges in this application, the obtained lithium-ion battery has relatively small liquid-phase transfer impedance, which is conducive to bonding of lithium ions and electrons, improving the electrochemical performance of the lithium-ion battery.

It can be seen from Example 3-1 to Example 3-12 that when the value of $d_4/d_3$ and the density of the negative electrode material layer are within the ranges in this application, the obtained lithium-ion battery has relatively small liquid-phase transfer impedance, which is conducive to improving the electrochemical performance of the lithium-ion battery.

It can be seen from Example 3-1 to Example 3-3 that when the number percentages of the primary particles and secondary particles remain unchanged, the liquid-phase transfer impedance tends to decrease with the increase of the value of $d_4/d_3$, the porosity of the negative electrode plate after 50 cycles tends to increase, the value of $d_4/d_3$ is controlled to be within the range in this application to obtain the negative electrode plate with proper porosity, which is conducive to improving the electrochemical performance and kinetic performance of the lithium-ion battery.

It can be seen from Example 3-4 to Example 3-6 that when the density of the negative electrode material layer, the density of the positive electrode material layer, and the value of $d_4/d_3$ remain unchanged, and the number percentage of the primary particles and the value of $W_1/W_2$ increase, the porosity of the negative electrode plate after 50 cycles tends to decrease, which is conducive to improving the electrochemical performance and kinetic performance of the lithium-ion battery.

It can be seen from Example 3-2, Example 3-4 to Example 3-6 that when the value of $d_4/d_3$ remains unchanged, the liquid-phase transfer impedance increases slightly with the increase of the number percentage of the primary particles, the porosity of the negative electrode plate after 50 cycles tends to increase first and then decrease, the number percentage of the primary particles and/or the number percentage of the secondary particles being controlled within the ranges in this application can still maintain the liquid-phase transfer impedance within a low range to obtain the negative electrode with proper porosity, which is conducive to improving the electrochemical performance and kinetic performance of the lithium-ion battery.

It can be seen from Example 3-1 to Example 3-3 and Example 3-11 that when the density of the negative electrode material layer and the value of $d_4/d_3$ are not within the ranges in this application, the liquid-phase transfer impedance of the lithium-ion battery dramatically increases, affecting the electrochemical performance of the lithium-ion battery. It can be seen from Example 3-1 to Example 3-3, and Example 3-12 that when the density of the negative electrode material layer and the value of $d_4/d_3$ are not within the ranges in this application, the porosity of the negative electrode plate after 50 cycles may increase dramatically, affecting the electrochemical performance of the lithium-ion battery. It can be seen that the density of the negative electrode material layer and the value of $d_4/d_3$ being controlled within the ranges in this application can effectively reduce the liquid-phase transfer impedance of the lithium-ion battery, which is more conducive to improving the electrochemical performance and kinetic performance of the lithium-ion battery.

Composition of the electrolyte usually affects the performance of lithium-ion batteries. Refer to Table 4. It can be seen from Example 1-5 and Example 4-1 to Example 4-20 that when the electrolyte includes carboxylate, and the proportion of carboxylate is within a suitable range, the capacity retention rate of the lithium-ion batteries at 2C can be increased. When the electrolyte further includes PS or lithium difluorophosphate, the impedance and lithium precipitation of the lithium-ion battery can be further reduced.

The foregoing descriptions are merely preferable embodiments of this application, but are not intended to limit this application. Any modification, equivalent replacement, or improvement made without departing from the principle of this application shall fall within the protection scope of this application.

## Claims

1. An electrochemical apparatus, comprising a negative electrode plate; the negative electrode plate comprising a negative electrode material layer; wherein the negative electrode material layer comprises a negative electrode active material, the negative electrode active material comprises graphite, $(d_1/d_2 - 1) \times 100\% \leq 0.56\%$ and $3.3600 \leq d_1 \leq 3.3720$ are satisfied; wherein $d_1$ Å is an interplanar spacing of (002) crystal plane of the negative electrode active material obtained by sintering the negative electrode material layer tested by an X-ray diffractometer, and $d_2$ Å is an interplanar spacing of the (002) crystal plane of the negative electrode active material in the negative electrode material layer tested by the X-ray diffractometer.

2. The electrochemical apparatus according to claim 1, wherein $3.3460 \leq d_2 \leq 3.3700$.

3. The electrochemical apparatus according to claim 1, wherein the negative electrode active material comprises primary particles and secondary particles formed by agglomerating the primary particles.

4. The electrochemical apparatus according to claim 3, wherein based on the number of particles of the negative electrode active material, the negative electrode active material satisfies at least one of condition (a) or (b):

   (a) a number percentage of the primary particles is 1% to 50%; or
   (b) a number percentage of the secondary particles is 50% to 99%.

5. The electrochemical apparatus according to claim 1, wherein a surface of the negative electrode active material has amorphous carbon.

6. The electrochemical apparatus according to claim 1, wherein based on a mass of the negative electrode active material, a mass percentage of the amorphous carbon is 0.1% to 5%.

7. The electrochemical apparatus according to claim 1, wherein a density of the negative electrode material layer is X g/cc, a porosity of the negative electrode material layer is Y, and $Y + 53.47X \geq 125$ is satisfied.

8. The electrochemical apparatus according to any one of claims 1 to 7, wherein the negative electrode plate satisfies at least one of the following characteristics:

   (c) the density of the negative electrode material layer is 1.4 g/cc to 1.75 g/cc;
   (d) a conductivity of the negative electrode material layer is greater than or equal to 15 S/cm;
   (e) the porosity of the negative electrode material layer is 25% to 50%; or
   (f) the graphite comprises at least one of artificial graphite or natural graphite.

9. The electrochemical apparatus according to claim 1, wherein the electrochemical apparatus satisfies $L_1 - L_2 \leq 135$ $\mu m$, wherein $L_1$ is a thickness of the electrochemical apparatus in a fully charged state, and $L_2$ is a thickness of the electrochemical apparatus in a fully discharged state.

10. The electrochemical apparatus according to claim 1, further comprising a positive electrode plate, wherein the positive electrode plate comprises a positive electrode material layer, a thickness of the positive electrode material layer is $d_3$ μm, and a thickness of the negative electrode material layer is $d_4$ μm, wherein $1.2 \leq d_4/d_3 \leq 1.6$.

11. The electrochemical apparatus according to claim 1, further comprising an electrolyte, wherein the electrolyte satisfies at least one of the following characteristics:

(i) the electrolyte comprises a carboxylate, the carboxylate comprises at least one of ethyl acetate, propyl acetate, propyl propionate, or ethyl propionate, and based on a mass of the electrolyte, a mass percentage of the carboxylate is 5% to 55%;
(ii) the electrolyte further comprises fluoroethylene carbonate and 1,3-propane sultone, and based on a mass of the electrolyte, a mass percentage of fluoroethylene carbonate is greater than a mass percentage of 1,3-propane sultone;
(iii) based on a mass of the electrolyte, a mass percentage of fluoroethylene carbonate is 1% to 10%, and a mass percentage of 1,3-propane sultone is 0.1% to 4%; or
(iv) the electrolyte further comprises lithium difluorophosphate, based on a mass of the electrolyte, a mass percentage of lithium difluorophosphate is 0.001% to 0.9%.

12. An electronic apparatus, comprising the electrochemical apparatus according to any one of claims 1 to 11.

FIG. 1

FIG. 2

## INTERNATIONAL SEARCH REPORT

| | International application No. |
|---|---|
| | **PCT/CN2022/119231** |

**A. CLASSIFICATION OF SUBJECT MATTER**

H01M 4/133(2010.01)i; H01M 4/587(2010.01)i; H01M 10/0525(2010.01)i; C01B 32/205(2017.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 负极, 阳极, 石墨, X射线衍射, XRD, 002, 晶面, 间距, 烧结, 煅烧, negative electrode, anode, graphite, X-ray diffraction, crystal plane, spacing, sinter, calcination

**C. DOCUMENTS CONSIDERED TO BE RELEVANT**

| Category* | Citation of document, with indication, where appropriate, of the relevant passages | Relevant to claim No. |
|---|---|---|
| PX | CN 113948675 A (NINGDE AMPEREX TECHNOLOGY LTD.) 18 January 2022 (2022-01-18)<br>description, paragraphs 4-24 | 1-12 |
| X | CN 112542587 A (NINGDE AMPEREX TECHNOLOGY LTD.) 23 March 2021 (2021-03-23)<br>description, paragraphs 2-59 | 1-12 |
| X | CN 110642247 A (GUANGDONG KAIJIN NEW ENERGY TECHNOLOGY CO., LTD.) 03 January 2020 (2020-01-03)<br>description, paragraphs 2 and 7-29 | 1-12 |
| A | JP 2018147783 A (MAXELL HOLDINGS LTD.) 20 September 2018 (2018-09-20)<br>entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119231**

| Patent document cited in search report | | | Publication date (day/month/year) | Patent family member(s) | | | Publication date (day/month/year) |
|---|---|---|---|---|---|---|---|
| CN | 113948675 | A | 18 January 2022 | None | | | |
| CN | 112542587 | A | 23 March 2021 | None | | | |
| CN | 110642247 | A | 03 January 2020 | CN | 110642247 | B | 25 May 2021 |
| JP | 2018147783 | A | 20 September 2018 | None | | | |

Form PCT/ISA/210 (patent family annex) (January 2015)

**REFERENCES CITED IN THE DESCRIPTION**

**Patent documents cited in the description**

- CN 202111209294